# EUROPEAN PATENT APPLICATION

(11) **EP 4 851 457 A1**
(43) Date of publication of application: **09.12.2026**
(21) Application number: 25180638.6
(22) Date of filing: 04.06.2025
(51) Int. Cl.: F03D 7/02, F03D 7/04

(54) **METHOD FOR OPTIMIZING WIND TURBINE OPERATION**

(71) Applicant: Siemens Gamesa Renewable Energy A/S, 7330 Brande (DK)
(72) Inventor: Alberts, Johannes Gerhardes Wardjan, 2660 Brøndby Strand (DK)
(74) Representative: SGRE-Association

(57) **Abstract**

The invention describes a method (200, 300) of optimizing the operation of a wind turbine (100). The method comprises the following steps, determine (210, 310) an operational parameter of the wind turbine (100), compare (220, 320) the operational parameter with a threshold, initiate (230, 350) a first correction action to untwist the wind turbine cables (118a, b, c, d), if the determined operational parameter overcomes the threshold, and initiate (240, 360) a second correction action, different from the first correction action, wherein the second correction action is executed concurrently the first correction action is executed.

## Description

### Field of invention

The invention describes a method for optimizing the operation of a wind turbine, and a wind turbine able to execute the method for optimizing its operation.

### Background art to the invention

Normally wind turbines, either onshore or offshore, comprise a tower, either bottom fixed or floating on sea surface, and a nacelle which is stands on top of tower and comprises a turbine shaft, a main drive, a generator, controllers for controlling the operation of the wind turbine and a yaw drive system that controls the nacelle movement relative to the wind. A wind turbine blades are mounted in a rotor, mechanically connected to the turbine shaft. The blades rotate under the power of the wind which makes the generator rotate and produce electrical power. A pitch controller is controlling the pitch of the blades in order to manipulate the speed of the rotation of the turbine shaft based on the wind speed. The yaw drive system rotates slowly the nacelle resting on top of the tower in order to arrange the blades to always face the wind in a direction that will allow optimal operation. The yaw drive system uses a wind direction sensor to determine the direction of the incoming wind and comprises an encoder that is able to determine the yaw angle or position of the nacelle. Additionally, the yaw drive system comprises a controller which uses the information from the sensors and the encoder and adjust the yaw angle of the nacelle according to the wind direction.

The power generated from the rotation of the generator is transferred to an electrical distribution system (externally to the wind turbine) via electric cables installed within the tower. As the nacelle rotates to align with the incoming wind, the electrical cables also move with it. The nacelle is designed to rotate multiple times-typically at least three full rotations (1,080 degrees)-to optimize its position. However, this continuous movement can cause the cables to become twisted and tangled, which may lead to significant damage and operational issues for the wind turbine if not addressed promptly. For this reason, electrical cable untwist is a mandatory operation of the wind turbine, with the downfall that once this operation is active and due to its seriousness, no other wind turbine operation is usually executed. Various systems have been proposed and installed in wind turbine in order to facilitate the problem of cable twist or untwist.

EP3402982A1 proposes a yaw sensor for a wind turbine that comprises a rotary switch installed in the yaw drive system and is able to be activated or deactivated based on the amount of a number related to the rotation of the nacelle. Then, a controller for tha yaw system receives the signal from the switch and rotates the nacelle to an opposite direction thereby untwisting the electrical cables of the wind turbine.

EP4146930A1 proposes a rotation limit detector installed in a wind turbine yaw system and being configured to detect a maximum limit of permitted rotations that the nacelle can make. Upon detection, the limit detector activates the respective switches that force the nacelle move in an opposite direction, thereby untwisting the electrical cables of the wind turbine.

CN108150354A discloses a turbine yaw correction system. This system comprises a controller, a correction cam (sensor) counter and electronic switch sensor. Based on the feedback from the switch sensor, a real-time yaw angle is obtained, and the correction can use this value in order to assess if the torsion angle of the electrical cables of the wind turbine is higher than threshold, and if this is true a cable untwist is executed.

All the above systems are nowadays well-established and able to correct the operation of the wind turbine by untwisting the electrical cables and avoid unnecessary damages. One thing that the prior art has in common is that for implementing this correction action, the wind turbine other operations are stayed, since there is no option for conveying electrical active power down the tower (and to the electrical distribution system) while the nacelle is rotating for untwisting the electrical cables.

Nowadays, the wind turbines are enormous electrical machines. In order to much the increased need for energy, and more particular energy from renewable systems, wind turbines size increased exponentially the recent years especially in offshore installed wind turbines. Rotor diameters for the newest wind turbines are surpassing the 240m., while the nacelle weight needed to carry such rotors reach and sometimes surpass the 500 tons. Therefore, while the need for untwisting the electrical cables is the same as before, the procedure nowadays becomes cumbersome for various reasons. Main issue starts with the yaw speed, typically for the bigger wind turbines, that is less than 1 degree per second the time for untwisting becomes high. Considering that most of the prior art teachings show that untwisting will be initiated for a nacelle that has done at least two rounds (720 degrees from starting position) it is obvious that the downtime spend is extremely important that can be up to an hour.

This time is increased for newer and bigger wind turbines, the loss of the power not produced during this time (time needed for untwisting) is extremely high and costs a lot to the turbine owners. In order to optimize the operation and take advantage of lost time, inventors of this invention identify that the operation of the wind turbine can be optimized by implementing various corrections actions to ensure that the power operation will be uninterrupted once the cable untwist is finished.

It is therefore an object of this invention to provide a method that will optimise the wind turbine operation taking into consideration the problems generated from a corrective action such as cable untwisting and improve already existing methods.

### Summary of the invention

This object is achieved by the execution of the method of claim 1 and by the wind turbine of claim 15 that is able to execute such method.

According to the invention, a method for optimizing operation of a wind turbine is disclosed. The method comprising the steps of determining an operational parameter of the wind turbine, and consequently comparing the operational parameter with a threshold. In the next step of the method, and only once the operational parameter overcomes the threshold, the method initiates a corrective action to untwist the wind turbine cables. At the last step of the method, a second correction action is also initiated, the second correction action is executed at the same time as the first correction action is executed.

The advantage of the inventive method explained is that will allow the wind turbine operation to be optimized by executing a consecutive second correction action, thereby increasing its operational effectiveness during its lifetime and consequently its power consumption while at the same time its ensuing the safety of the operation.

It should be noted that the term "action" and "correction action" shall refer to commands from the wind turbine central controller that will allow the wind turbine to change its current operational procedure. For instance, "action" shall be considered a command from the wind turbine controller to change the pitch angle of the wind turbine blades, thereby initiating a pitching action or activity to be done. Not limited to that example, any command during the execution of the method shall be considered as "action". Respectively, the term "correction" refers to actions initiated to correct the wind turbine operation. Such actions normally considered to be actions that will bring the wind turbine in initial state that was changed due to operation, for example untwisting of the electrical cables and or calibration of pitch angle of the blades are most of common corrections that wind turbines undergo during its operation.

In equally advantageous embodiment of the invention, a wind turbine that is comprising a wind turbine controller able to execute the method according to the invention is included. It must be understood that the wind turbine controller shall comprise all the necessary means, such as programming and/or control logic, computer, memories short-term and long-term, switching components and actuators, that allow its effective and efficient operation. The invention shall not be limited by them, and possible additional features are also covered by it.

In another embodiment of the invention, the operating parameter comprises a yaw angle or a yaw position of the nacelle of the wind turbine. Equivalently, the threshold is a yaw angle or a yaw position related threshold. The value of the yaw angle or the yaw position can be determined with any method, directly measured or estimated, already known in the industry. The most common way is to use the already existing encoder installed in the wind turbine yaw system in order to acquire the yaw angle that the nacelle has travelled from its initial position (or North Calibration as named in the industry) established when the wind turbine was erected or from the dominant wind position that is currently operating. Alternatively, this yaw angle can be translated into yaw position via simple mathematical manipulation. The determined value here and its use depends on the structure of the controller and how it programmed to operate. In another alternative way, the determined value can also be estimated using other obtained parameters of the wind turbine such as wind direction, wind speed and/or any other suitable parameter. Once the determine value of the yaw angle or yaw position has been validated, a comparison with a yaw angle or yaw position threshold is done, in order to initiate the first correction action of the claimed method. The threshold value can be either a single static or dynamic value or a range of values or even a moving threshold that depends on other parameters of the operation.

In yet another embodiment of the inventive method, the first correction action comprises yawing the wind turbine to reduce the first operational parameter, which untwists the electrical cables. By adjusting the nacelle's position, this action alleviates the stress on the cables caused by excessive twisting, ensuring their integrity and optimal performance. Once the threshold is established to be overcome, the wind turbine controller sends signal to the yaw system and its own controller to initiate the corrective action thereby reducing the value of the yaw angle or yaw position. With this correction action the method ensures that twisted electrical cables are relaxed and experience less stress. The yawing of the wind turbine has as primary target to untwist, fully or partially, any electrical cables affected by excessive yawing of the wind turbine from its initial position. The yawing action can be executed until the wind turbine has arrived in its desired position. For normal power production this desired position is usually facing the wind direction, but with untwisted cables or can also be stopped earlier as long as sufficient untwist of the cables has been achieved.

In a further embodiment of the method, an additional step involves determining a second operational parameter and comparing it to a second threshold. This step can be performed simultaneously with the determination of the first operational parameter or as a subsequent action to provide additional support for the correction process. In a more specific embodiment, the second operational parameter is a wind speed parameter, and the second threshold is equivalently a wind speed related threshold. Adding such a parameter check between at any steps of the method has various advantages. For instance, ensuring that the corrective actions will interrupt the operation (hence the production) of the wind turbine as minimal as possible, and will be initiated only when the wind is low enough that minimal losses occur. Alternatively, this threshold can work as protection that will not allow the initiation of any correction action when wind speeds can become harmful for the wind turbine and its integrity.

The wind speed can be determined via various methods. Any suitable sensor system, such as wind speed sensor or LIDAR, should be understood as being part of the determination. Alternatively, is known in the field that the wind speed can be accurately estimated from a combination of other operating parameters of the wind turbine, such as pitch position, rotor speed, power and/or torque, by simple mathematical logic. Any of these approaches can be used to determine the wind speed parameter and the value determined is compared with threshold. The threshold, also wind speed related threshold, can be a single static or dynamic value, or a moving threshold that may depend on values of other established parameters or even a range of values. Any suitable version can be used as long as it fits the wind turbine controller funcionalities. In another approach, a wind speed trend can be used as a wind speed related threshold. As trend should be understood a value that shows the tendency of the wind speed to be increasing or decreasing for a certain period of time.

In another specific embodiment of the method, the second correction action includes individually pitching the wind turbine blades. This action allows for various optimizations in the turbine's operation, such as calibrating the pitch system and ensuring that each blade functions effectively during the correction process. Pitching the wind turbine blades is used, when the wind turbine is not producing power, for calibration of any of the wind turbine sensor systems and/or for exercise and hence calibrate the pitch system health itself. By initiating such activity, especially at the time of the first correction action (yawing, and thereby untwisting) monitoring and correcting some of the wind turbine essential systems and functionality is achieved and make effective use of the downtime that the wind turbine has in order to implement the first mandatory correcting action.

The individual pitching of the wind turbine gives the advantage of exercising all three-blade pitching system and ensuring its normal operation. The pitching system comprises at least one hydraulic (or electrical) cylinder able to adapt the pitch angle of the blade, the hydraulic cylinder itself comprises a pitch piston moveable within the hydraulic cylinder and accumulator hydraulically connected to the cylinder. By forcibly pitching the blades back and forth (or as so called in the industry, in and out) the pitching system is exercising its funcionality and monitoring its performance. Additionally, possible faults (such as leaks) can be detected and/or adequate lubrication of the pitch bearing is achieved as well.

The usual pitch funcionality check is exercised every few days. Usually, this funcionality is scheduled to impact as little wind turbine power production as possible. With the inventive method of the invention, this can be achieved at maximum since the pitch exercise is executed without costing power production losses.

In a further specific embodiment, the second correction action may include also the operation of the wind turbine in a motor mode. This action facilitates to further support the correction actions, first and second, by implementing actions that need the operation of the wind turbine as motor. Such actions may be rotation of the rotor to reach specific position. In a more specific example of this embodiment, the second correction action further comprises rotating the wind turbine operated as motor in so as the blades reach a calibration position in relation to rotor azimuth position. Such specific positions can be used for calibration of for example blade load sensors. This advantageous embodiment is used for easing the second correction initiated for some of possible correction actions that can be implemented. In that manner, a more optimal blade pitch exercise or blade sensor calibration can be executed, since the position of the blade in the azimuth plane has significant role during these procedures.

In another specific embodiment of the method, pitching the wind turbine blades of the wind turbine individually further comprises set a minimum pitch angle for a first blade and set an idle pitch angle for a second and a third blade, different from the first one. In that manner, a meaningful correction action for a blade related system can be executed and further optimize the operation of the wind turbine while the wind turbine is implementing the first correction action, yawing of the wind turbine.

In more specific embodiment, the step of pitching the wind turbine blades of the wind turbine individually further comprises set a minimum pitch angle for a first blade and set an idle pitch angle for a consecutive second and a third blade is repeated three times such that each blade of the wind turbine has the minimum pitch angle set once, and the remaining blades have the idle pitch angle set during each respective repetition. By implementing the specific embodiment, the method ensures that all three blades and their respective features that need correction will undergo any needed correction action. Taking advantage of the time needed for the first correction action to be implemented, a wind turbine that is operated in motor mode can use this in order to implement correction actions in all three blades if needed.

In another embodiment of the invention, the method further comprises determine a third operational parameter, wherein the third operational parameter is a wind direction parameter and calculate a wind direction sensor value based on the first operational parameter, the second operational parameter and the third operational parameter in order to calibrate a wind direction sensor. Another surprising advantage of the disclosed method is that while the first correction action is implemented, additional hardware not directly related with the wind turbine blades can be also corrected. Such a systems are installed in the nacelle, usually, and are related to wind direction measurements. Taking advantage of the nacelle movement due to yawing of the first correction action and the pitching of the blades, a more meaningful calibration of the wind direction sensor can be done, and further optimization of the wind turbine operation can be implemented.

In a different but equally advantageous embodiment, the second operational parameter is an electrical parameter, and the second threshold is an electrical related threshold. Other correction actions that are equally advantageous for implementation can be introduced by changing the type second operational parameter. A very advantageous approach would be if the second operational parameter is an electrical related parameter, and equivalently the threshold is a threshold related to an electrical parameter. In a more specific embodiment of this, the electrical parameter is a voltage value or any derivatives of the voltage value. By using such electrical type parameters, monitors electrical features of the wind turbine while executing the first correction.

In a last embodiment of the claimed invention, the second correction action includes feeding a utility grid with a reactive power based on the voltage value or the derivative of the voltage value. Given the significant downtime associated with the first correction action, an additional beneficial step is to supply reactive power to the electrical grid. This action not only enhances the operational efficiency of the wind turbine but also supports the stability of the overall wind farm during the correction process. Despite the suspension of delivering of the active power from the wind turbine while implementing the first correction action, meaning the yawing of the wind turbine that will untwist electrical cables, supporting the grid with delivery of reactive power is sometime essential for the grid and/or the operation of a wind farm that the wind turbine is part. Hence, an optimization of the wind turbine operation, through the fulfilment of grid support in such times shall be considered as quite the advantage for it.

All the above-mentioned embodiments may be known to an expert in the field if executed individually. Nevertheless, the inventive method is not merely an aggregation of known features or method steps rather than a set of technical features that are by functional interaction between them achieve, altogether, the technical effect of optimizing the wind turbine operation.

The various explained aspects of the invention may be combined and coupled based on the dependencies explained herein, in any way possible within the scope of the invention. Moreover, other aspects, features and/or advantages described or implied by the invention will be easily apparent from the embodiments that described hereinafter.

### Brief description of drawings

Objects as well as features will become clear from the below detailed description as considered in combination with the accompanying drawings. It is to be understood that the drawings are designed merely for illustrating embodiments of the claimed invention and not as definition for limiting the invention.
- Figure 1: shows a conventional wind turbine and some of its systems
- Figure 2: is an exemplary diagram of the claimed method
- Figure 3: is another exemplary diagram of an alternative embodiment of the claimed method

The objects in the figures are not drawn to scale. Also, are representative of all features and systems included in a wind turbine, for reasons of simplicity many systems have been intentionally not drawn in order to avoid misunderstanding ang give emphasis to the essential features of the invention.

### Detailed description of embodiments of the invention

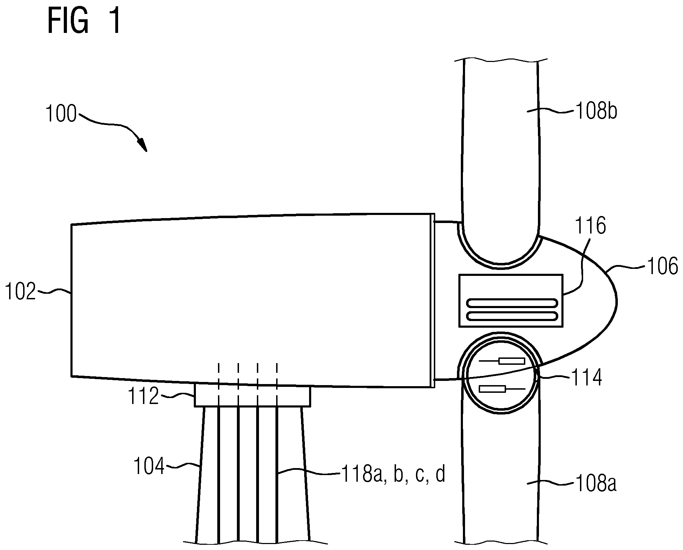

Figure 1 shows a part of wind turbine (100) and its main components. The wind turbine (100) comprising a tower (104), the tower (104) can be fixed in a foundation in the earth if the wind turbine (100) is an onshore wind turbine, in the seabed if the wind turbine (100) is an offshore wind turbine or even attached to a floating foundation if the wind turbine (100) is a floating wind turbine. The proposed solution may work with any of the mentioned options for the wind turbine (100) and should not be seen as limited for a specific type of wind turbine.

In the same figure, the tower (104) supports a nacelle (102) to which a rotor (106) is mechanically mounted. The rotor (106) comprises a plurality of wind turbine blades (108a, 108b) that extend from outwardly from the rotor (106) through a pitch bearing system (not highlighted in the figure). The blades (108a, 108b) are rotatably around its axis and can be adjusted by a pitch controller (also not shown) that dictates a pitching system (114) to change the pressure within a hydraulic reservoir (116) thereby moving a hydraulic actuator that will eventually change the pitch angle of the wind turbine blade (108a, 108b). As can been seen here, for a pitching action of the wind turbine blades (108a, 108b) various components of the wind turbine (100) must cooperate and the optimal operation, or improved operation of such components shall be entitled for the optimal operation of the wind turbine (100).

The nacelle (102) includes various mechanical and electrical components (not shown for simplicity) within the nacelle such as the main drive that transfers the rotor movement to the generator, may or may not include a gear box, cooling systems, converters and many other needed systems for the operation of the wind turbine (100). The electrical power produced by the generator is transferred from the top of the wind turbine, down in the base of the wind turbine through a power cable (108a, b, c, d). Additionally, to the power cables mentioned, other cables (108a, b, c, d) may run from the nacelle (102) down through the tower (104) such as communication and/or control signal related cables, fiber-optic cables, grounding and lightning protection, hydraulic and/or pneumatic line related cables as well as cables related to auxiliary power systems. As can be seen in Fig.1 all this cable passing from the nacelle and through a yaw system (112) to the tower and from there are move down to the based on the wind turbine. The yaw system (112) is the system that rotates the nacelle (102) in order to drive the rotor (106) to find the correct and more optimal direction in relation to the incoming wind. The yaw system (112) usually comprises (not shown here for simplicity) more than one yaw motors, powered by AC or DC, fit to rotate the nacelle (102) when a yaw controller receives the respective control signal from the wind turbine controller. The yaw system (112) also comprises yaw brakes, passive or active, fit to lock and/or resist any nacelle (102) movement when the latter is properly aligned with the incoming wind or when the wind turbine is not operational. Typically, the yaw system (112) of the exemplary wind turbine (100) includes a yaw bearing that supports the nacelle (102) and an dis the main mean that permits the rotation of it. Additionally, but not always mandatory to exist are various sensors to monitor the operation of the yaw system and its subsystems described above. Such sensors are yaw position sensors (typically encoders) that are able to determine the angular (yaw) position of the nacelle (102) in relation to the tower (104). Other subsystems and/or sensors, such as the system of EP4146930A1 where limit sensors able to detect that the nacelle (102) rotation exceed its limits and initiate a yaw action to the opposite direction in order to correct the operation of the turbine and ensure safety for the cables, may exist. Such correction actions are crucial for the operation of the turbine as it can save the integrity of the wind turbine (100) and its systems

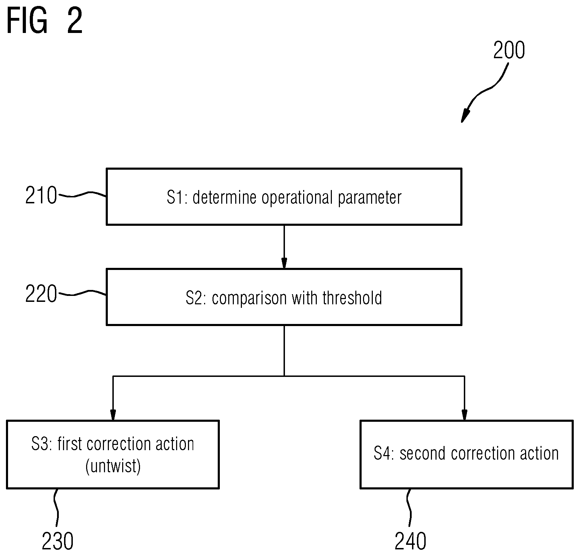

A correction action for our wind turbine (100) as such may require more than simple detection of the position of the nacelle (102). In fact, more than one type of correction actions that will initiate yawing the wind turbine. Commonly, there are more than one threshold related to yawing the wind turbine (100) with aim to untwist the wind turbine cables. The wind turbine may have a so called "hard" threshold, typically higher value, and a so called "soft" threshold in order to decide the initiation of the yawing. Usually, the "hard" threshold is related to a more direct threat for the safety and integrity of the wind turbine (100), therefore when activated the wind turbine controller will instantly shut down the operation and start correcting the wind turbine operation by yawing the wind turbine nacelle (102). Cases like these are rare, but crucial for the wind turbine (100). The more common correction action is when the wind turbine (100) and its controller initiate a correction action, such as yawing, based on "soft" threshold. In order to optimize the process more than one parameter may be checked. The threshold in these cases is the number of times or the distance that the nacelle travelled from its initial zero position. During installation, the wind turbine engineers align the nacelle (102) to its zero position (in relation to the tower (104)) or as experts call it North Calibration. This procedure will be described below in details and in relation to the main embodiment of the method a shown in Figure 2.

Referring now to Figure 2, the figure illustrates the main embodiment of the method in a flowchart manner. In the first step of the method (200), S1 (210) the determination of an operational parameter of the wind turbine (100) is done. While the wind turbine (100) is in operation, as explained before, various operational parameters are obtained from sensors installed on the wind turbine (100) itself. In preferred embodiment of this step S1 (210), the operational parameter is the yaw angle or yaw position (also called angular position) of the nacelle (102). This can be obtained directly via the encoder, or any other similar sensor installed in the yaw system (112) of the wind turbine (100). The encoder continously operating in the yaw system (112) is able to output a number for the distance the nacelle "travelled" from its initial position. This number is a positive or negative number, depending on the direction the nacelle (102) rotates. For example the number may in the form "88" or "-88", this number means that nacelle (102) have travelled 88 degrees from its initial position. Alternatively, a directly absolute number maybe used in in order to avoid having the burden of the direction to be checked. Alternatively, a direct value of the yaw angle of the wind turbine (100) may be used. The value can be directly obtained from a sensor or can be also calculated from other operational values such as yaw error (a commonly used value in wind turbine), or wind speed direction calculations that will indicate how the wind turbine (100) reacts to the wind speed and direction changes. In another alternative way of obtaining the first operational parameter, a sensor installed in any of the wind turbine cable (108a, b, c, d) can determine how much the cable has twisted, i.e. a full rotation and then based in the cable sensor feedback we can calculate the yaw nagle or yaw position of the nacelle (102) in relation to the tower (104). Has to be understood that there are many ways of obtaining such a value and the preferred embodiment of this method (200) shall not be limited by the method obtaining of such a value.

In the next step, S2, of the method (200) the obtained operational parameter is compared with a threshold. The latter is an obvious step to ensure that the method (200) will not be executed either prematurely or for no reason. Various types of thresholds can be used here as well and has to be clarified that the invention is not limited to the type of threshold. In continuation of the above example, once the yaw position is determined to be + or -88, this value is compared with an extreme value that indicates that a correction action should be executed in order to optimize the operation of the wind turbine (100). The threshold shall be an absolute value and does not have to be limited to the sign indicative of the direction of the nacelle (102). Typically, most wind turbines have a threshold of 3 full rotations (or 1080degrees), depending on the type of wind turbine. This can be up to 10 full rotations (3600 degrees). To visualize this, when the most extreme is "x" full rotations, the threshold value should be calculated from the below: Eq1 : $Threshold = 360 x ,$ where x=the number of full rotations permitted for a given wind turbine.
Alternatively, the value can be a range of values and not a single value as shown in before. In that manner a more flexible approach is provided for the wind turbine operation. In yet another example, the threshold can be a floating range that may also depend on another operational parameter, such as wind speed. Or in a simpler version, the floating range can depend on the amount of time that the wind turbine stays within this range. Has to be understood that type of threshold is not limited and depends on the directions given to the specific wind turbine.
In the same preferred embodiment as explained above, the threshold of the step S2 is a yaw angle or yaw position related threshold. In that manner the direct advantage of the direct comparison of same values that will indicate if the wind turbine operation may not be optimal or may lead to unnecessary endangerment of the wind turbine (100) due to threshold exceedance.

When it is validated that threshold has been overcomed, the next steps S3 and S4 are initiated via the wind turbine controller. The initiation of these steps is not limited to be at the same time. It may or may not happen at the same time. First, the first correction action of S3 is initiated. The first correction action is implemented to untwist the wind turbine cables (108a, b, c, d) and hence relax them from any possible stresses occurred due to excessive twist resulting from the rotation of the nacelle (102). In a preferred embodiment of the method (200), the first correction action of step S3 includes actively yawing the wind turbine (100). Yawing the wind turbine (100) means that the wind turbine controller sends a signal to the yaw system (112) of the wind turbine and dictates the yaw motors of the yaw system (112) to start operating, at the same time release the yaw brakes to ease the rotation and finally turn the nacelle to a direction that will reduce the value of the operating parameter. For example, if the operational parameter is measured to be 210degrees, and this value is overcoming the respective threshold then the wind turbine controller will initiate the correcting action and will send a signal to the yaw system (112) that will have to bring the operational parameter into an acceptable value, preferably 0 that will indicate that the nacelle has been brought again to its initial position, but that may not always be the case. Alternatively, an acceptable range for the reduced value may exist. Other limits may occur at the same time and has to be understood that as long as the value of the first operational parameter is reduced then the method step S3 is executed properly, and the operation of the wind turbine is optimized. Alternatively to direct yawing via the yaw system (112), the wind turbine may be able to passively yaw the wind turbine (100). Passive yaw is a common term used in the industry for cases where the wind turbine (100) is rotating without any yawing being generated the controller. Therefore, the step S3 may include the correction action being executed via pitching. The latter can happen by releasing the brakes of the yaw system (112) in order to ease the rotation and then the wind turbine controller instead of generating a yawing signal, the wind turbine controller may determine a different pitch angle able to generate enough force to create a yaw moment and once being set to at least on wind turbine blade (108a, b) being able to move the wind turbine in a direction that will reduce the first operational parameter. Even with this unorthodox and inconvenient method, the main advantage of the optimization of the operation through the cable relaxation is achieved since the value of the first operational parameter is reduced. For the latter alternative way of executing the first correction action, the reduction of the first operational value may be smaller, but still effective. In a further alternative scenario, the correction action may include both above mentioned procedures, executed in any possible way of order.

Once the step S3 is initiated, the step S4 shall also be initiated. Step S4 includes the initiation of second correction action of the wind turbine (100). In that manner, the wind turbine (100) can optimize more than one much needed of its features (the first being handled by the first correction action, untwisting) and once start again its normal operation the power production is ensured to be optimal. One further advantage of the method (200) is that since the time of executing the first correction action is usually high, the second correction action can also have the function of monitoring features for possible malfunctions, identify them and correct them. The second correction action shall always be different from the first correction and always shall be executed at the time of the execution of the first correction. In that manner, the additional advantage of gained time is also obtained.

In an advantageous embodiment of the method (200), the second correction action may include, among others, pitching at least one of the wind turbine blades (108a, b) individually. Once the second correction action is initiated in step S4, the wind turbine controller may order the wind turbine (100) to execute a pitch system (114) exercise. This exercise facilitates to bring the pitch system (114) to its optimal conditions for operation, this should happen often to an operating wind turbine since due to the changing wind conditions and operating needs of the wind turbine mismatch of pitching system values may happen due to the nature of the system. The individual pitching exercise of the pitch system (114) ensure that all the blades will do the much-needed exercise thereby optimizing the pitching system (114) operation. In a preffered embodiment of the method (200), the second correction action includes pitching the blades (108a, b) individually from its current position (current should be understood as the position that the second action is initiated, and it can be any blade pitch angle) to a minimum, allowed, pitch angle position (or so called "operating position" for the pitch angles, or "fine pitch") while pitching the rest of the blades (108a, b) to an idle pitch angle position (or so called "mechanical end stop position"). This can be achieved by the wind turbine controller set and send a pitch angle signal to the pitch system (114) that specifies that the blade pitch should be anywhere to a pitch angle between 0°-20° , preferably between 0°-15° for the at least one blade (108a, b) that will move the minimum pitch angle position and anywhere between 80°-90°, preferably between 85°-90° for the consecutive rest of the blades(108a, b). This exercise will ensure that the pitch system (114) is monitored, and its circuitry (hydraulic reservoir, hydraulic cylinders and pressure within circuitry) is monitored and reset. The described pitching activity will initiate a pressure drop within the circuitry of the pitch system (114) that additionally to the reset produced, can be used to monitor if the pitch system (114) circuitry has any leakage that may compromise the optimal operation of the wind turbine (100). Since the time needed to execute this exercise is usually much less than the time needed for executing the first correction action, the second correction action that includes pitching the wind turbine blades of the wind turbine individually may be executed more than once.

In a most preferred embodiment of the method, the pitching the wind turbine blades individually is repeated three times such that each blade of the wind turbine has the minimum pitch angle set exactly once, and the remaining blades have the idle pitch angle set during each respective repetition. In that manner all the respective pitch system (114) are exercised and ensures that will contribute to the optimal operation of the wind turbine.

A preferred alternative to the above advantageous embodiment may include that the second correction action at step S4 further comprising the step of initiating the wind turbine (100) to operate as a motor. Since the wind turbine (100) executes the first correction (untwist) the power production to the grid is zero, therefore using the wind turbine (100) as a motor in order to ensure optimal operation of the wind turbine (100) was found advantageous. The enablement of the wind turbine (100) to operate as a motor is known to the industry and with simple manipulation of the wind turbine (100) converter settings, the wind turbine controller can command the wind turbine (100) to operate in motor mode. In that manned and in a further specific embodiment of this method (200) the second correction action includes also the rotating the wind turbine rotor operated as motor in so as the blades (108a, b) reach a calibration position in relation to rotor azimuth position. Calibration position is the position that commonly the wind turbine blades (108a, b) have in order to calibrate equipment such as blade load sensors, and/or strain gauges that are installed on them. For this specific exemplary embodiment, once the rotation is concluded and the at least one of the blades (108a, b) has reached its respective position the same pitching exercise as in the previous embodiment shall happen. One blade is pitched to a minimum, allowed, pitch angle position while pitching the rest of the blades (108a, b) to an idle pitch angle position. The blade that is at the minimum pitch angle position is then calibrated for their respective edge bending while the other two blades, at the idle pitch angle position are calibrated for their respective flap bending. This calibration can easily be executed considering that gravity forces are known (due to the determined rotor azimuth position) as well as the blade weight. Once this is done for one blade, rotation of the rotor is initiated again and pitching activity may start once the calibration position is reached by a second blade, different than the first one.

This advantageous embodiment may be combined with the previous embodiment, or alternatively may happen one after the other as long the first correction action (untwist) is executed. Based on the last embodiment, the wind turbine operation can further be optimized as more than one operating optimization can happen, namely untwisting wind turbine cables and pitch system exercise as well as blade sensor calibration.

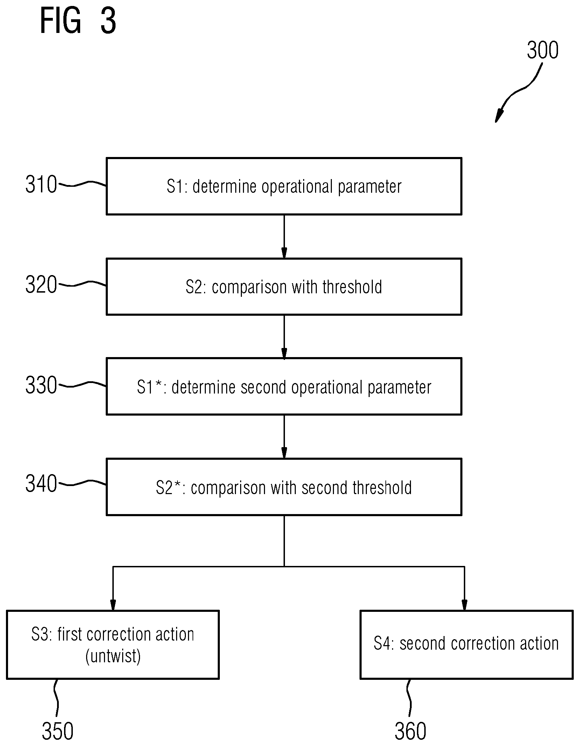

With reference to Figure 3, an alternative embodiment of the method (300) is presented. This embodiment includes two additional steps, S1* (330) and S2* (340), which are performed before the wind turbine controller initiates any of the proposed correction actions. In S1*, the controller determines a second operational parameter, and in S2*, this parameter is compared to a specific threshold. This approach enhances the decision-making process, ensuring that the correction actions are executed only under optimal conditions. In the first additional step, S1* (330) the method comprises the determination of a second operational parameter and in the second, S2* (340) comparison of second operational parameter with a second threshold, wherein the second operational parameter is different from the first operational parameter. With these additional steps, a further additional optimization for the wind turbine operation is achieved, as the condition for initiating the respective first, S3 (350), and second, S4 (360) corrections actions are more favorable to be the optimal one.

In more detailed example now of the method (300), the second operational parameter is a wind speed parameter, and the second threshold is a wind speed related threshold. This facilitates in that the method (300) becomes more selective in the decision to initiate the respective corrections actions. Preferably the yawing the wind turbine (100) to untwist the wind turbine cables (108a, b, c, d) happens when the wind speed is lower, approximately between 3m/s. and 7m/s., preferably when the speed is 7m/s. In this range, as little power as possible is lost by the execution of the first correction action. By monitoring an additional second threshold, a more optimize operation regarding the correction actions and its execution can be achieved. The second operational parameter can be a direct wind speed measurement from a sensor, or it can also be a modified value that not only will be an indication about the current wind speed but will also be an indication for the wind speed trend. In that example the wind turbine controller will not use a flat value to compare it with a wind speed related threshold but will have an indication if this wind speed tends to increase or if the wind speed tends to decrease. For identification of the wind speed trend, the determined wind speed value can be fed through a low pass filter and determine its differential value therefore the second operational parameter is a filtered differentiated wind speed value and equivalently the second threshold can be a wind speed trend threshold. An example of this can be represented by the below: Eq.2: First (or second)correction = LP (wind_speed, time_constant1) < second_threshold AND LP (diff(wind_speed), time_constant2)>second_threshold_trend, wherein the LP can be anu low pass filter, wind_speed is the measured wind speed, second threshold is the wind speed related threshold, diff(wind_speed) is the differentiated value of the measured wind speed, and second_threshold_trend is a equivalent wind speed related threshold expressed in trend values. The time constants 1 and 2 can have any value, depending on the needs of the wind turbine, but the time constant 1 should have smaller value than the time constant 2. Based on the above explained equation, the benefit of not initiating the correction actions based on a single static value but based on a trend of the wind incoming wind speed ca be achieved.

The steps S1* (330) and S2* (340) are not necessarily executed in that order as depicted in Fig.3. These steps can be moved before steps S1(310) and S2 (320) or they can specifically place before the initiation of any of the steps S3 (350) and S4 (360). With the latter is achieved the effect to limit both correction actions activation but only the additional one. In that manner, more efficient conditions can be achieved for the additional correction action to be executed.

In yet another alternative of the method (200, 300) an additional determination of a third operational parameter happens, wherein the third operational parameter is a wind direction parameter, and the second correction action includes calculate a wind direction sensor value based on the first operational parameter, the second operational parameter and the third operational parameter in order to calibrate a wind direction sensor. In this example, the second correction action is executed and has as main effect the calibration of the wind direction sensor included in the top of the nacelle (102). Taking advantage of the already initiated yawing activity for untwisting the wind turbine, the controller can further optimize the operation of the wind turbine by determining the wind direction sensor value, by using the already determine first and second operational parameters. In that manner the wind turbine controller is able to obtain the information for when the wind direction sensor is in the wake of component or is completely blocked or free by such component. During this example, and as proposed above, the standard deviation of wind speed and/or wind direction can be used and if found to be low, the specific yaw position that this achieved can be determined and used for the calculation of calibration value for the wind direction sensor. Equivalently, when the standard deviation of these values is high, this is an indication of wake and/or blocking effect being present for the wind direction sensor and the specific yaw position or yaw angle can be recorder and used for the calibration value for the wind direction sensor.

In another useful example of the method (200, 300), the second correction action includes feeding a utility grid with a reactive power based on the voltage value or the derivative of the voltage value. While the previous example emphasizes in direct effects of the second correction action to the optimization of the wind turbine (100) operation, this embodiment provides an indirect benefit to the wind turbine (100) control by the proposed method (200, 300). By supporting the utility grid and transmission operators directly with reactive power via the wind turbine, the wind turbine (100) while not in power production mode it can still assist in the proper voltage regulation in the point of connection (of the wind farm that it is part of) or directly to the grid stability and its continuous operation. Ensuring that the grid will not collapse, ensure the continuous and optimized operation, without any possible losses that may exist from a grid prone to failures or from disconnections of the wind turbine (100) from the grid.

For the implementation of this specific example, the second operational parameter is an electrical parameter, and the second threshold is an electrical related threshold. Any electrical parameter, in a more preferred embodiment a voltage or a derivative of the voltage value can be understood as a needed parameter for the execution of the method. In more understandable in relation to the method (300) example, the method (300) executes the step S1* by monitoring and determining a value of the voltage from the grid-side of the converter of the wind turbine (100). The voltage value, measured in the point of common coupling via sensors, can be directly or indirectly used as in put for the converter controller. Once the first correction action of the method (300) is initiated, the wind turbine controller can inform the converter controller that the wind turbine (100) is executing the first correction action, and therefore the converter controller may ask for reactive power support. Therefore, the converter can calculate the needed value for supporting the grid and ensure, as much as this can be possible, that the grid will not collapse while the first correction is implemented.

The above example was identified as particularly advantageous due to the fact that does not only improve the collaboration between the wind turbine (100) and the utility grid hence optimize the wind turbine (100) operation, but also can optimize the operation of the wind farm. Since the wind turbines in a wind farm are all communicating through the wind farm controller, other wind turbines can be aware for when the wind turbine (100) is implementing the method (300) via a signal send from the wind turbine (100) controller to the wind farm controller and specifically communicate that reactive power support should be provided by that one wind turbine that is implementing the method (300), and/or that the reactive power provided by that one wind turbine can be increased in order to substitute another wind turbine in the farm.

while the main and other various embodiments of the claimed invention, it should be understood that such embodiments are described by way of example only and it will be appreciated that features of different embodiments may be combined with one another. For instance, while the wind turbine (100) implements the first correction action and the second correction executed and finished, enough time may exist to implement a different variation of the second correction action.

Numerous variations, changes and substitutions shall arise to the experts skilled in the art without departing from the scope of the claimed invention as defined by the claims.

## Claims

1. Method (200, 300) for optimizing operation of a wind turbine (100), the method (200, 300) comprising the steps
- determine (210, 310) an operational parameter of the wind turbine (100),
- compare (220, 320) the operational parameter with a threshold,
- initiate (230, 350) a first correction action to untwist the wind turbine cables (118a, b, c, d), if the determined operational parameter overcomes the threshold, and
- initiate (240, 360) a second correction action, different from the first correction action, wherein the second correction action is executed concurrently the first correction action is executed.

2. Method (200, 300) according to claim 1, wherein the operational parameter comprises a yaw angle, or a yaw position of the wind turbine nacelle and the threshold is a yaw angle or yaw position related threshold.

3. Method (200, 300) according to claim 2, wherein the first correction action includes yawing the wind turbine nacelle (102) for reducing the first operational parameter thereby untwisting the wind turbine cables (118a, b, c, d).

4. Method (200, 300) according to claim 3, wherein the method further comprises the steps
- Determine (330) a second operational parameter, and
- Compare (340) the second operational parameter with a second threshold,
wherein the second operational parameter is different from the first operational parameter.

5. Method (200, 300) according to claim 4, wherein the second operational parameter is a wind speed parameter, and the second threshold is a wind speed related threshold.

6. Method (200, 300) according to claim 5, wherein the second correction action includes individual pitching the wind turbine blades (108a, b).

7. Method (200, 300) according to claim 6, wherein the second correction action further comprises the step of initiating the wind turbine (100) to operate as a motor.

8. Method (200, 300) according to claim 7, wherein the second correction action further comprises rotating the wind turbine operated as motor in so as the blades (108a, b) reach a calibration position in relation to rotor azimuth position.

9. Method (200, 300) according to claim 6 or claim 8, wherein pitching the wind turbine blades (108a, b) of the wind turbine (100) individually further comprises set a minimum pitch angle for a first blade (108a, b) and set an idle pitch angle for a second and a third blade (108a, b), different from the first blade (108a, b).

10. Method (200, 300) according to claim 9, wherein the pitching the wind turbine blades (108a, b) individually further comprises repeating the pithing three times such that each of the rotor blades (108a, b) assumes the minimum pitch angle once.

11. Method (200, 300) according to claim 5, wherein the method further comprises the steps
determine a third operational parameter, wherein the third operational parameter is a wind direction parameter, and
the second correction action includes calculate a wind direction sensor value based on the first operational parameter, the second operational parameter and the third operational parameter in order to calibrate a wind direction sensor.

12. Method (200, 300) according to claim 4, wherein the second operational parameter is an electrical parameter, and the second threshold is an electrical related threshold.

13. Method (200, 300) according to claim 12, wherein the electrical parameter is a voltage value or a derivative of a voltage value.

14. Method (200, 300) according to claim 13, wherein the second correction action includes feeding a utility grid with a reactive power based on the voltage value or the derivative of the voltage value.

15. A wind turbine (100) comprising a tower (104), a nacelle (102) mechanically connected to the tower and being able to rotate around its yaw axis, a rotor (106) mechanically coupled to the nacelle, and at least two pitchable rotor blades (108a, b), the wind turbine further comprises a wind turbine controller configure to perform the method (200, 300) according to any of the previous claims from 1 to 14.
